# DEMANDE DE BREVET EUROPEEN

(11) **EP 1 819 163 A1**
(43) Date de publication de la demande: **15.08.2007**
(21) Numéro de dépôt: 06101564.0
(22) Date de dépôt: 10.02.2006
(51) Int. Cl.: H04N 7/167, G07F 7/08, H04N 5/00

(54) **Méthode de contrôle d'accès par pré-paiement**

(71) Demandeur: NagraCard SA, 1033 Cheseaux-sur-Lausanne (CH)
(72) Inventeur: Kudelski, André, 1095, Lutry (CH)
(74) Mandataire: Wenger, Joel-Théophile

(57) **Abrégé**

Il reste donc un problème non résolu à savoir de minimiser l'impact d'une attaque sur la recharge du crédit dans un module de sécurité attaché à un décodeur de télévision à péage.

La solution à ce problème est apportée par une méthode de contrôle d'accès à des produits télévisuels à pré-paiement diffusés dans un flux de données, par un décodeur de télévision à péage relié à un module de sécurité disposant d'un crédit, cette méthode comprenant les étapes suivantes :
- réception d'un message de sécurité (ECM) comprenant une clé temporaire (CW) permettant de décrypter le flux de données,
- vérification de l'accès aux dites données sur la base des droits contenus dans le module de sécurité,
- si la vérification a été positive, vérification d'un compteur de clés temporaires envoyées au décodeur et détermination si un maximum a été atteint,
- transmettre la clé temporaire que si le maximum n'est pas atteint et incrémenter le compteur de clés temporaires.

## Description

### Introduction

La présente invention concerne le domaine de la télévision à péage, en particulier la sécurisation des données à accès conditionnel.

### État de la technique

Pour accéder à des produits ou des services à accès conditionnels, l'utilisateur dispose d'un récepteur/décodeur qui reçoit le flux sous forme encrypté, et d'un module de sécurité en charge des opérations de contrôle d'accès.

Ainsi, dans le flux de données, des messages de sécurité sont également transmis qui contiennent les clés permettant de décrypter le flux encrypté. Ces messages sont eux-mêmes encryptés par une clé dont seul le module de sécurité dispose, ce dernier recevant le message et vérifiant les droits de l'utilisateur avant de retourner la clé temporaire (Control Word) autorisant le décodeur à décrypter les données.

Dans le document W003085959, l'accès à des services ou produits se fait par la gestion d'un crédit dans le module de sécurité. A chaque produit télévisuel correspond un prix, soit pour l'intégralité du produit, soit correspondant à une unité de temps. Le crédit est décrémenté au fur et à mesure du traitement du flux de données, à savoir le traitement d'un message de sécurité (ECM) et le renvoi de la clé courante au décodeur.

Tant que le crédit est positif, le module de sécurité accepte le traitement de message de sécurité et renvoie la clé correspondante au décodeur. Une fois le crédit épuisé, le module de sécurité refuse de renvoyer la clé du message de sécurité et la décryption du flux est donc interrompue.

Ainsi, si un tiers a réussi à percer la manière de recharger le crédit, il aura accès sans limite à tous les produits quand bien même la sécurité des messages de sécurité n'est pas compromise.

### Brève description de l'invention

Il reste donc un problème non résolu à savoir de minimiser l'impact d'une attaque sur la recharge du crédit dans un module de sécurité attaché à un décodeur de télévision à péage.

La solution à ce problème est apportée par une méthode de contrôle d'accès à des produits télévisuels à pré-paiement diffusés dans un flux de données, par un décodeur de télévision à péage relié à un module de sécurité disposant d'un crédit, cette méthode comprenant les étapes suivantes :
- réception d'un message de sécurité comprenant une clé temporaire permettant de décrypter le flux de données,
- vérification de l'accès aux dites données sur la base des droits contenus dans le module de sécurité,
- si la vérification a été positive, vérification d'un compteur de clés temporaires envoyées au décodeur et détermination si un maximum a été atteint,
- transmettre la clé temporaire que si le maximum n'est pas atteint et incrémenter le compteur de clés temporaires.

Selon l'invention, le processus de vérification des droits de l'utilisateur se fait en deux étapes. Premièrement, les droits sont vérifiés par exemple par l'existence d'un crédit dans le module de sécurité. Ce crédit peut être gérer de deux manières, soit par l'achat d'un produit télévisuel et le stockage d'un droit correspondant dans le module de sécurité, soit par l'achat en fonction du temps (ou d'un nombre de message de sécurité). Dans la première hypothèse, un message de droit (EMM) est traité par le module de sécurité et l'achat d'un produit a pour effet de décrémenter le crédit d'un montant prédéfini et de stocker un droit dans le module de sécurité. Tous les messages de sécurité (ECM) seront autorisés car ils contiennent comme condition la présence de ce droit. Au moment de la réception dudit message, le module de sécurité vérifie que le droit est présent et n'effectue aucune action sur le crédit. Dans la seconde hypothèse, c'est directement le message de sécurité qui provoque une décrémentation du crédit d'un montant qui est prédéfini et peut par exemple être contenu dans le message de sécurité lui-même. Il est à noter que dans cette seconde variante, il n'est pas nécessaire que chaque message provoque le débit du crédit, un débit pouvant activer une période de quelques minutes durant laquelle tous les autres messages seront décryptés et renvoyés au décodeur.

Après cette première vérification, une seconde vérification est effectuée et qui consiste à vérifier l'état d'un compteur de clés temporaires renvoyées au décodeur. A chaque clé renvoyée, le compteur est incrémenté et ce compteur est comparé à une valeur maximale préprogrammée.

Si la valeur du compteur a atteint ou dépassé le maximum, le module de sécurité bloque le renvoi des clés temporaire et l'accès au flux de données encryptées est donc plus possible.

### Brève description des figures

L'invention sera mieux comprise grâce à la description détaillée qui fait référence à la figure unique et qui illustre un décodeur de télévision à péage avec modules de sécurité.

### Description détaillée

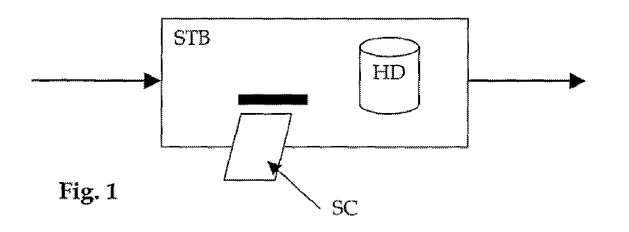

Selon l'exemple illustré à la figure 1, le décodeur STB est connecté localement à un module de sécurité SC qui est sous forme d'une carte à puce. Le module de sécurité peut être de type amovible (telle une carte à puce en forme de carte crédit, ou directement monté dans le décodeur sous la forme d'un circuit spécialisé.

Les messages de sécurité ECM et de droit EMM sont traités par le module de sécurité SC et donc extraite du flux entrant pour être acheminé au module de sécurité par le décodeur STB. Les droits, crédits et compteurs sont stockés dans le module de sécurité SC afin d'en préserver l'inviolabilité. Le mécanisme de vérification de droits comprend ainsi une nouvelle fonction qui est le comptage de toutes les clés temporaires CW renvoyées par le module de sécurité SC.

Ce compteur joue donc le rôle de superviseur.

Selon une première variante, ce compteur ne peut être re-initialisé et donc la durée de vie du module de sécurité est prédéterminée à l'avance. Du fait que ce compteur est initialisé uniquement lors de la fabrication, il joue le rôle d'un fusible selon des critères d'utilisation.

Selon une deuxième variante, le compteur peut être réinitialisé selon un scénario de sécurité particulier. Un message de droit (EMM) peut comprendre une commande pour réinitialiser le compteur ou le définir à une certaine valeur. On peut alternativement utiliser un type de message particulier, différent du message de droit et donc encrypté par une clé différente. Ainsi, la réinitialisation d'un tel module de sécurité va répondre à des critères de haute sécurité et très rarement utilisés.

Selon un mode particulier de réalisation, la réinitialisation se fait sur demande de l'utilisateur. Quand le compteur atteint une valeur proche du maximum, un message est affiché sur la console du décodeur pour l'inviter à requérir une réinitialisation. Avec ce message, le module de sécurité a préalablement généré un nombre témoin qui doit être également transmis au centre de gestion. Ce nombre témoin peut être un nombre aléatoire ou un nombre représentant une signature sur ses données internes.

L'utilisateur appelle le centre de gestion pour lui communiquer son numéro de module de sécurité et le nombre témoin généré par le module de sécurité. Ce nombre peut comprendre une partie aléatoire et une partie représentant une signature du numéro de module de sécurité.

Le centre de gestion de gestion va vérifier les données transmises à savoir si le numéro de module de sécurité correspond bien à celui transmis avec le nombre témoin et dans le cas positif, transmet un message de réinitialisation à destination du décodeur couplé audit module de sécurité.

Afin de renforcer la sécurité, le nombre témoin peut être inclus dans le message de réinitialisation et vérifier ainsi dans le module de sécurité. La donnée dans le message de réinitialisation peut être une signature du nombre témoin (Hash) en lieu et place du nombre témoin lui-même. On qualifiera l'information contenue dans le message d'un identifiant du nombre témoin regroupant les deux notions décrites ci-dessus.

La réinitialisation du compteur n'est effective que si le nombre témoin est le même que celui initialement transmis au décodeur. Par réinitialisation, on comprend la mise à zéro dudit compteur ou le chargement à une valeur prédéfinie. Cette valeur prédéfinie peut également être transmise dans le message de réinitialisation. Si l'exemple ci-dessus a été décrit par comptage vers un maximum, le processus peut être inversé pour décrémenter vers un minimum qui peut être zéro.

L'encryption de ce message de réinitialisation peut être faite avec une clé commune aux messages de droit (EMM) ou particulière et unique pour ce type d'opération.

L'invention s'applique également à un compteur partiel de clés temporaires à savoir le comptage d'une clé sur deux par exemple (clé paire ou clé impaire).

## Revendications

1. Méthode de contrôle d'accès à des produits télévisuels à pré-paiement diffusés dans un flux de données, par un décodeur de télévision à péage relié à un module de sécurité disposant d'un crédit, cette méthode comprenant les étapes suivantes :
- réception d'un message de sécurité (ECM) comprenant une clé temporaire (CW) permettant de décrypter le flux de données,
- vérification de l'accès aux dites données sur la base des droits contenus dans le module de sécurité,
- si la vérification a été positive, vérification d'un compteur de clés temporaires envoyées au décodeur et détermination si un maximum a été atteint,
- transmettre la clé temporaire que si le maximum n'est pas atteint et incrémenter le compteur de clés temporaires.

2. Méthode de contrôle d'accès selon la revendication 1, **caractérisée en ce que** la vérification de l'accès aux dites données est basée sur la vérification du crédit courant.

3. Méthode de contrôle d'accès selon la revendication 1, **caractérisée en ce que** la vérification de l'accès aux dites données est basée sur la vérification d'un droit stocké dans le module de sécurité.

4. Méthode de contrôle d'accès selon les revendications 1 à 3, **caractérisée en ce que** le compteur de clés temporaire est réinitialisé par la réception d'un message de droit encrypté par une clé personnelle audit module de sécurité.

5. Méthode de contrôle d'accès selon les revendications 1 à 3, **caractérisée en ce que** le compteur de clés temporaire est réinitialisé selon les étapes suivantes:
- génération par le module de sécurité d'un nombre témoin propre audit module de sécurité,
- affichage de ce nombre sur un organe de visualisation du décodeur,
- transmission à un centre de gestion par l'utilisateur d'un identifiant du module de sécurité et du nombre témoin,
- préparation par le centre de gestion d'un message de réinitialisation à destination dudit module de sécurité comprenant un identifiant du nombre témoin,
- vérification par le module de sécurité de la concordance entre le nombre témoin généré et l'identifiant du nombre témoin reçu,
- réinitialisation du compteur si la vérification est positive.

6. Méthode de contrôle d'accès selon la revendication 5, **caractérisée en ce que** la réinitialisation est faite par le chargement d'une valeur contenue dans le message de réinitialisation.
